Europäisches Patentamt

European Patent Office

Office européen des brevets

(19)

(11) Publication number : **0 577 317 A1**

(12) ## EUROPEAN PATENT APPLICATION

(21) Application number : 93304884.5

(22) Date of filing : 23.06.93

(51) Int. Cl.⁵ : **H04N 1/40**

(30) Priority : **02.07.92 IT TO920557**

(43) Date of publication of application :
**05.01.94 Bulletin 94/01**

(84) Designated Contracting States :
**DE FR GB**

(71) Applicant : **Ing. C. Olivetti & C., S.p.A.**
**Via G. Jervis 77**
**I-10015 Ivrea (IT)**

(72) Inventor : **Pomo, Vittorio**
**Via Saorgio 105**
**I-10047 Torino (IT)**
Inventor : **Mellina, Dario**
**Viale Marconi 4**
**I-10015 Strambino (Torino) (IT)**

(74) Representative : **Robson, Aidan John**
**Reddie & Grose 16 Theobalds Road**
**London WC1X 8PL (GB)**

(54) **Colour compensation device for an image reader.**

(57) A colour compensation device for an image reader has an optical scanner to direct images onto a point reading device. This generates analog signals in response to the points read on a line of an image of a document. An amplifier (32) matches the signals read to an image processor (36). The gain of the amplifier is controlled by a gain control circuit (44) in dependence on a reference colour signal. This reference colour signal is generated prior to the reading of a new document and is repeatedly applied to the control circuit (44) during the reading of the new document. Thus the gain of the amplifier remains unchanged during reading of the document, even if the characteristics of the optical system change.

FIG.1.

Jouve, 18, rue Saint-Denis, 75001 PARIS

## Field Of The Invention

The present invention relates to a colour compensation device for an image reader, and more particularly to a device for compensating variations in the characteristics of the optical reading system of a scanner, with respect to a reference colour, for example white.

## Background Of The Invention

In a known scanner, of the type described in US Patent No. 4646961, a group of CCD (Charge Coupled Device) sensors convert optical image signals into corresponding analog electrical signals. An optical system, made up of special mirrors and of an objective lens, converges the optical image of a document to be read onto the CCD sensors, in such a manner that each of the sensors is struck by a very small area of the image normally called a pixel, Generally, the sensors are aligned in a single row, which is disposed transversely to the movement of the document to be read.

The analog signal generated by the CCD sensors corresponds to the image read and is amplified by an image amplifier. This amplified voltage is applied to a video image processor circuit, for subsequent processing operations.

On account of the sensitivity tolerances of the CCD sensors and the dispersion characteristics of the optical system, it is necessary to correct the global response of the reading device prior to each scanning operation.

In known devices, for example in the device described in Italian Patent No. 1183816, this correction is performed by taking a certain number of readings of a colour reference constituted by a white field, for example a strip of white colour palced transversely to the entrance of the zone for reading the documents.

The peak values of the voltage generated by the CCD sensors in response to the white field, which peak values are expediently amplified and filtered, gradually charge a capacitor to a maximum voltage value. This capacitor is inserted into a circuit for biasing the image amplifier, the gain of which is regulated as a function of the voltage of said capacitor, throughout the duration of the subsequent scanning of a document.

As the scanning of a document in the reading phase may in some cases last for a relatively long time, and moreover may be interrupted several times, the biasing capacitor may become discharged, thus causing a variation in the response of the image amplifier and of the image processor.

## Summary Of The Invention

Preferred embodiments of the invention provide a colour compensation device which is stable throughout the time required to scan a document.

In an embodiment of the present invention a reference signal representing the response of the reader to the colour white is generated and stored in digitial form prior to the scanning of a document. This signal is passed repeatedly to a circuit for regulating the gain of an amplifier of the video signals so as to match the amplification of the video signals of each document read to the corresponding reference signal. Amplification is maintained unchanged throughout the time taken to scan each document.

The invention is defined with more precision in the appended claims to which reference should now be made.

## Brief Description Of The Drawings

A preferred embodiment of the invention will now be described in detail by way of example, with reference to the accompanying drawings, in which:

Figure 1 is a block diagram of an image reader circuit embodying the invention;

Figure 2 is a circuit diagram of a colour compensation device embodying the invention;

Figure 3 diagrammatically represents a scanner.

## Detailed Description Of A Preferred Embodiment

With reference to Figure 3, a document 10 bearing information on its upper face 12 is advanced in the direction of the arrow D towards a reading station 14, by means of advancing rollers 16.

The reading station 14 comprises a linear-type illuminating element 18, which is disposed transversely to the direction of the arrow D. The illuminator 18 may be consistuted by a gas discharge lamp, or by a row of light emitting diodes. When the document 10 is not present, the light beam L generated by the illuminator 18 strikes a strip 20 of uniform white colour, which is used as a colour reference for the calibration of the sensitivity of the circuits for amplifying the optical signals, as will be seen hereinbelow.

The strip 20 is fixed on a support plane 22, on which the document 10 slides.

The light beam L is reflected by the strip 20 and after further reflections on mirrors 23, 24 passes through an objective lens 25 and finally strikes a sensor element 26.

The sensor element 26 is normally constituted by a CCD device (Charge Coupled Device), which is made up of numerous, for example approximately 2700, elements which are sensitive to light, each one of which converts the light incident on it into an electrical signal in a known manner. Accordingly, when an original 10 is caused to slide on the support 22 under the illuminator 18, each sensitive element of the device explores, in the course of each scan, a small portion or pixel of an elemental line of the document 10, converting the corresponding quantity of light reflected into an electrical pulse or signal having a certain amplitude. The circuit and the procedural details concerning the processing of the image signals detected by the CCD device are known per se, and are not described in detail as they are outside the subject matter of the present invention. For further information, reference is made to Italian Patent No. 1183816 cited hereabove.

As is known, the inevitable imperfections of the optical systems introduce reading errors, which must be corrected.

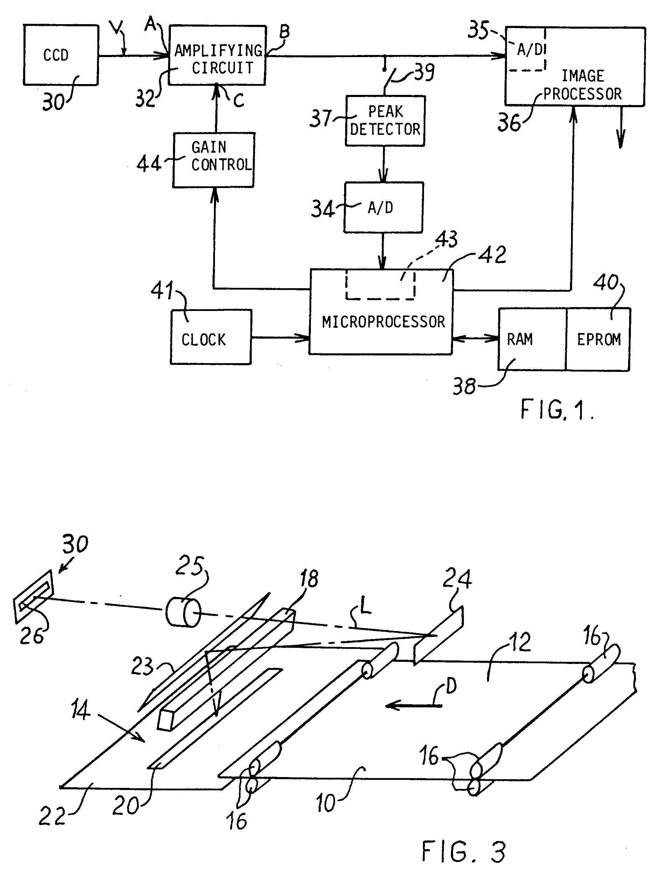

With reference to Fig. 1. the signals generated by the CCD device 30 are transmitted to an amplifying circuit 32. The circuit 32 is connected to an image processor 36, which processes, in a manner known in the art, the signals supplied by the reading device 30.

In particular, a conventional image processor normally handles digital signals; accordingly, the processor 36 is preceded by a specifically associated analog-digital converter 35, indicated by the dotted line within the block 36. The image processor 36 normally operates between two voltage thresholds Vref+ and Vref-. Therefore, to utilise fully the entire range between the thresholds, the upper threshold Vref+ and the maximum voltage generated by the CCD device are made to coincide, when it is excited by the maximum luminosity reflected by a white surface, for example the white strip 20 (Figure 3) or the white background of the page of the document 10.

The circuit of Figure 1 further comprises a central unit 42 with a microprocessor associated with a random access memory (RAM) 38 and a programmable read only memory (EPROM) 40, for the manangement of the processing programs and to hold the data, respectively.

The output B of the amplifying circuit 32 is further connected to a peak detector 37, in turn connected to an analog/digital converter (A/D) 34. The converter 34 is connected to the central unit 42, which, as will be explained hereinbelow, processes the peak values of the readings of the CCD, which peak values are used by a circuit 44 for controlling the gain of the amplifying circuit 32, in order to correct automatically the effects of the imperfections of the optical system.

Before starting to read the document 10, the central unit 42 commands a reading of the white reference strip 20, so as to calibrate the gain of the amplifier 32, so that the image processor 36 receives an analog signal corresponding to the maximum value permitted by said processor, i.e. a value approximately equal to the threshold Vref+.

Therefore, the white strip 20 is read successively a certain number of times, for example thirty.

In the course of each reading, all the sensitive elements of the CCD are scanned in succession. The output signal of the CCD, amplified by the circuit 32, is passed to the circuit 37, which is a peak detector. Each of the 30 analog values of the peak signals, indicated by PICi, in which i is the progressive serial number from 1 to 30, is converted into digital form by the converter 34 and stored by the central unit 42 in the RAM 38. For example, the peak values are converted into an 8 bit binary number, which is able to represent 256 different levels of the peak signals.

Because of the difference in sensitivity of various CCD devices and of the differing efficiency between one optical system and another, even the response to the colour white may vary between different types of image readers.

Accordingly, in order to obtain, at the input of the image processor 36, a signal corresponding to the white which is always equal to the threshold Vref+, the central unit 42 executes, by means of its own computing unit 43, a computation by successive approximations, to find a theoretical maximum reference value PWM, so as to obtain, as we shall see hereinbelow, at the input of the image processor 36 the value Vref+ on reading the white strip 30.

To this end, use is made of the following expression:

$$PW_i = PW_{i-1} + (Vref+) - PIC_i$$

in which $PW_i$ is an intermediate value of the theoretical reference, whose maximum is $PWM = PW_{30}$; Wref+ is the value, in digital form, of the upper threshold of the processor 36 and $PIC_i$ is the peak value of the signal generated by the CCD at the i-th reading of the white strip 20. The intial value $PW_o$ is established experimentally and is stored permanently in the EPROM 40.

The central unit 42 selects the greatest out of the computed values of PW, which is called PWM, and stores it in the RAM memory. This signal PWM will be used, as explained in detail hereinbelow, as a reference signal to keep the gain of the circuit 32 constant during the subsequent phase of reading the document 10.

During this phase of reading the document 10, the peak detector 37 is disabled, for example, by opening a switch 39.

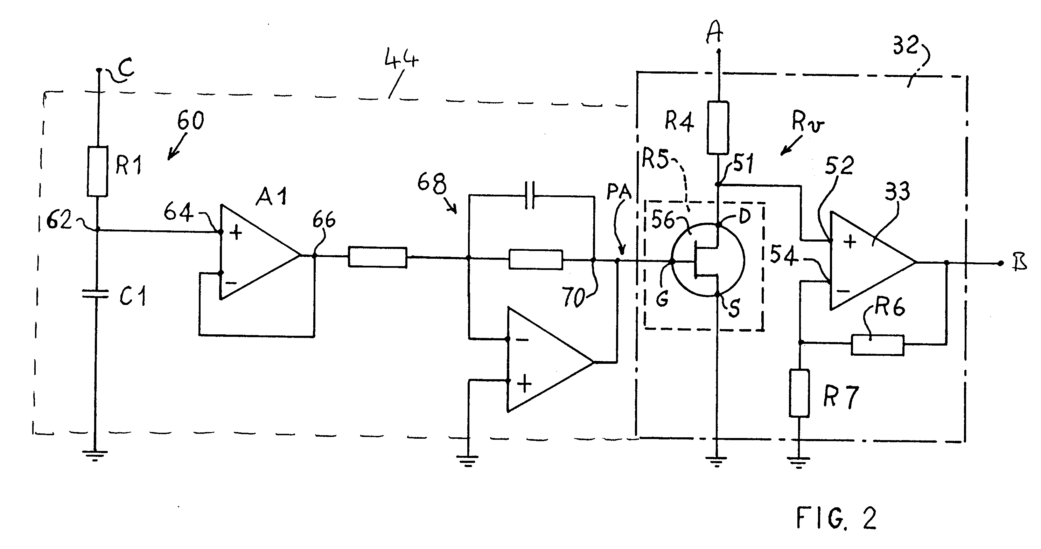

Figure 2 shows in greater detail the automatic gain control circuit indicated by 44 in Figure 1. In the text which follows, the expression "gain" is understood as referring to the ratio between the voltages at the output (B) and at the input (A) of the amplifying circuit 32.

The signals passed by the CCD 30 (Figure 1) are applied to a terminal A (Figure 2) of the amplifying circuit 32, which comprises a variable-resistance voltage divider Rv and an amplifier 33. The divider Rv is formed by a fixed resistor R4 and a variable resistor R5 , which is connected between the resistor R4 and earth.

A node 51 which is common to the resistors R4 and R5 is connected to an input 52 of the amplifier 33, which may be for example an operation amplifier and so the input 52 is the non-inverting input.

The amplifier 33 has a closed circuit gain which is dependent upon the ratio between two resistors R6 and R7 which are placed between the output B and an inverting input 54 and earth.

According to a preferred embodiment which is non-limiting, the variable resistor R5 comprises a device 56 incorporating a field effect semiconductor (FET).

As is known, by varying the bias of a control electrode G (Gate), the resistance Rds between the electrodes D (drain) and S (Source) varies.

The digital signal PWM which after a conversion into an analog signal PA, is applied to the electrode G of the device 56.

To this end, the signal PWM , extracted from the memory RAM in digital form, is applied to an input C of an integrating circuit 60, comprising a resistor R1 connected in series to earth with a capacitor C1. A common point 62 is connected to a non-inverting input 64 of a voltage amplifier A1 in a "voltage follower" configuration, which is known per se. An output 66 is connected to an RC filter 68. At the output 70 of the filter 68 there is found the analog signal PA corresponding to the digital signal PWM. The output 70 is connected to the control electrode G of the device 56. The analog signal PA, which obviously is a DC voltage, biases the FET device 56 in such a manner as to establish a corresponding resistance between Drain D and Source S (Figure 2) disposed in series to earth with the resistor R4.

In this way, the video signal V generated in the course of each scan by the CCD is reduced by the variable divider Rv as a function of the value of the signal PWM stored in the RAM and corresponding to the white colour level detected by the CCD prior to effecting the reading of the document 10.

The filter circuit 68 has the function of eliminating residual harmonic frequencies, which are present after the integration of the signal PWM.

Accordingly, the circuits 60 and 68 as a whole may be considered in relation to the digital signal PWM, as a digital/analog converter circuit.

During the phase of reading the document 10, the CCD device scans the document 10, line by line, with a scanning frequency Fs, for example 200Hz, generated by a clock circuit 41 (Figure 1). Upon each scan of an elemental pixel line, i.e. at an interval of time Ts=1/fs, the central unit extracts from the RAM 38 the signal PWM and passes it to the circuit 44 (Figure 1). In this way, the video signal V corresponding to each elemental line of pixels read by the CCD will be amplified to the same extent, in accordance with the value of the white reference signal detected previously and held in the RAM 38 through the time taken to read the document 10. It is accordingly clear that each page of the document 10 will be read and processed by the circuit 36 of Figure 1, in a uniform manner, independently of the length of said page and of any interruptions in reading. Upon completion of the reading of a page, the signal PWM will be cancelled and replaced by a new value PWM', relating to a new detection of the white reference level.

It is understood that it is possible to modify, and or subsititute parts in the colour compensation device for a scanner, without thereby departing from the scope of the invention.

By way of example, the device 56 may be inserted in the feedback circuit of the amplifier 33, in place of the resistor R7. In this way, the signal PWM acts indirectly on the response of the amplifier 33, modifying the gain thereof.

## Claims

1. A colour compensation device for an image reader, comprising an optical system (14) to direct images onto a point reading device (26) capable of generating analog signals in response to the points read on a line of an image in a document, a circuit (32) to amplify the signals in order to match the signal to an image processor (36) connected to the amplifying circuit, means for generating a constant reference colour signal (PWM), and means (44) for controlling the gain of the amplifying circuit as a function of the reference colour signal, characterised in that the reference colour signal is generated, on each occasion, prior to the reading of a new document and is applied repeatedly to the control means (44) during the reading of the new document, in order to maintain the gain of the amplifying circuit unchanged upon variation of the characteristics of the optical system.

2. A device according to Claim 1, characterised in that the reference colour signal is applied to the control means upon each reading of a subsequent elemental line of points of the document.

3. A device according to Claim 1 or 2, characterised in that the generating means comprise a peak detector (37) and a computing unit (42, 43) to define the reference colour signal by successive approximations, in response to the repeated reading of a reference colour image (20) performed on each occasion prior to reading of the document.

4. A device according to Claim 1 or 2 or 3, characterised in that the gain control means (44) comprise a variable voltage divider (R4, R5) capable of modifying the signal generated by the reading device as a function of the reference colour signal.

5. A device according to Claim 4, characterised in that the variable voltage divider comprises a semiconductor element (56) capable of varying its own resistance as a function of the reference colour signal.

6. A device according to Claim 4, characterised in that the amplifying circuit (32) comprises an operational amplifier (33), and in that the voltage divider comprises a fixed resistor (24) having a first end connected to the reading device and a second end connected to an input of the operational amplifier (33) and a variable resistor (R5) connected between the second end and earth, the resistance of the variable resistor being conditioned by the reference colour signal.

7. A device according to Claim 6, characterised in that the variable resistor is a semiconductor element (56), biased by the reference colour signal applied to a control electrode.

8. A device according to Claim 5 or 7, characterised in that the reference colour signal is a binary number held in a memory (38) throughout the time taken to read the document.

9. A device according to Claim 8, characterised in that the control means (44) comprise an integrating circuit (60), capable of converting the binary number into an analog signal for controlling the semiconductor element.

10. A device according to Claim 4, characterised in that the variable voltage divider is connected to an input of the amplifying circuit (33).

11. A device according to Claim 4, characterised in that the variable voltage divider constitutes a feedback network (R6, R7) of the amplifying circuit (33).

FIG. 1.

FIG. 3

FIG. 2

European Patent Office

**EUROPEAN SEARCH REPORT**

Application Number

EP 93 30 4884

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 451 845 (CANON KK)<br>* column 3, line 13 - column 4, line 26 *<br>* abstract; claims 1,5; figure 1 *<br>--- | 1 | H04N1/40 |
| A | PATENT ABSTRACTS OF JAPAN<br>vol. 7, no. 214 (E-199)(1359) 21 September 1983<br>& JP-A-58 106 956 ( RICOH KK ) 25 March 1983<br>* abstract *<br>----- | 1 | |
| | | | TECHNICAL FIELDS SEARCHED (Int. Cl.5 )<br><br>H04N |

The present search report has been drawn up for all claims

| Place of search | Date of completion of the search | Examiner |
|---|---|---|
| THE HAGUE | 09 SEPTEMBER 1993 | ISA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)